Europäisches Patentamt

(19) European Patent Office

Office européen des brevets

(11) Numéro de publication : **0 027 413**
**B1**

(12) **FASCICULE DE BREVET EUROPÉEN**

(45) Date de publication du fascicule du brevet :
18.01.84

(51) Int. Cl.³ : **H 04 B 9/00**, H 04 B 1/66

(21) Numéro de dépôt : **80401441.3**

(22) Date de dépôt : **08.10.80**

(54) **Système de transmission multi-accès intégral simultané sur lignes de transmission par fibres optiques.**

(30) Priorité : **15.10.79 FR 7925741**

(43) Date de publication de la demande :
**22.04.81 Bulletin 81/16**

(45) Mention de la délivrance du brevet :
**18.01.84 Bulletin 84/03**

(84) Etats contractants désignés :
**DE GB IT SE**

(56) Documents cités :
**US-A- 3 803 405**
**ELEKTROTECHNIK UND MASCHINENBAU, volume 90, avril 1973, no. 4, VIENNE (AT) H. OHNSORGE "Neue Möglichkeiten für Nachrichtensysteme auf der Basis des Laser-Glasfaserkanals", pages 193-197**
**IEEE TRANSACTIONS ON AEROSPACE AND ELEC-TRONIC SYSTEMS, volume AES-4, no. 5, septembre 1978 NEW YORK (US) H. BLASBALG "Air-ground, ground-air communications using pseudo-noise through a satellite", pages 774-790**

(73) Titulaire : **CROUZET**
**128, Avenue de la République**
**F-75011 Paris (FR)**

(72) Inventeur : **Foucard, Joseph**
**2 rue Franz Lehar**
**F-26000 Valence (FR)**

(74) Mandataire : **Bloch, Robert et al**
**Cabinet ROBERT BLOCH 39 avenue de Friedland**
**F-75008 Paris (FR)**

# Système de transmission multi-accès intégral simultané sur lignes de transmission par fibres optiques

La présente invention concerne un système à réseau maillé à accès multiples et mettant en œuvre la technique d'étalement de spectre, pour transmission d'informations sous forme de signaux électriques par fibres optiques entre les postes d'une série de postes comprenant un émetteur et un récepteur.

De tels systèmes sont déjà connus, notamment par le brevet US-A-3 803 405. Dans le système de ce brevet, le code, c'est-à-dire l'identification du destinataire, et l'information sont distincts. L'appelant doit attendre de déceler sur la ligne un intervalle de temps non occupé par d'autres utilisateurs avant de pouvoir transmettre successivement l'adresse de l'appelé et sa propre adresse. En outre, dans le dispositif de ce brevet, le milieu comporte deux canaux de transmission disposés parallèlement, chaque canal, qui est composé d'une série de fibres optiques, transmettant l'information dans un sens préférentiel.

La présente invention vise à éliminer ces inconvénients.

A cet effet, elle concerne un système du type défini ci-dessus, caractérisé par le fait que :
— l'émetteur comprend
    des moyens de mise en forme des signaux électriques,
    un générateur de code pseudo-aléatoire,
    un modulateur pour réaliser le produit des signaux électriques et du code pseudo-aléatoire pour étaler le spectre des informations à transmettre sur toute la bande disponible à l'émission,
    un adaptateur de puissance recevant ledit produit, et
    un transducteur relié à l'adaptateur pour transformer les signaux de sortie de l'adaptateur en impulsions lumineuses destinés à être introduits dans la fibre optique, et
— le récepteur comprend
    un transducteur recevant les impulsions lumineuses pour les transformer en signaux électriques,
    un amplificateur à contrôle automatique de gain relié au transducteur,
    un filtre passif d'acquisition de la synchronisation relié à l'amplificateur,
    un autre générateur de code pseudo-aléatoire relié au filtre,
    un oscillateur à fréquence commandée par une tension fournissant un signal d'horloge au générateur pour le commander,
    des moyens d'asservissement connectés entre l'amplificateur et l'oscillateur pour synchroniser l'oscillateur,
    un multiplicateur relié au générateur et à l'amplificateur pour réaliser le produit de leurs signaux de sortie,
    un semi-intégrateur relié au multiplicateur, et
    un détecteur à seuils relié au semi-intégrateur pour restituer les signaux électriques transmis par l'émetteur.

Grâce à l'invention, chaque utilisateur a la possibilité d'accès au réseau quand il le veut, à tout moment, sans avoir à se préoccuper de l'état d'occupation du réseau et sans signaler qu'il demande l'accès au réseau, et ce, pour tous les abonnés et au même instant. En outre, la transmission des informations circule sur un seul support et dans les deux sens. Sur ce réseau passif, l'énergie existant à un instant donné provient d'un ou plusieurs abonnés et se dirige vers d'autres sans éléments d'amplification ou de relais de couplage.

L'invention sera mieux comprise à l'aide de la description suivante notamment de divers types de liaison réalisés selon l'invention, en référence au dessin annexé, sur lequel :

La figure 1 représente une liaison à sens unique à étalement de spectre, qui permet de transmettre des informations d'un point à un autre, en ambiance très perturbée, dans un seul sens (capteur envoyant des informations à un organe de traitement) ;

La figure 2 représente une liaison bilatérale sur une seule ligne à étalement de spectre, pour l'échange d'informations entre deux points dans les deux sens, en ambiance très perturbée (calculateur dialoguant avec un périphérique) ;

La figure 3 représente une liaison à accès multiples simultanés à étalement de spectre pour l'échange d'informations dans les deux sens entre plusieurs périphériques et un organe central de traitement ou entre plusieurs abonnés pris deux par deux sur une même ligne (calculateur dialoguant avec plusieurs périphériques ou réseau téléphonique) ;

La figure 4 représente une liaison à accès multiples simultanés à réseau maillé et étalement de spectre qui permet des liaisons avec plus de sécurité de fonctionnement, telles que par exemple pour les « bus » de transmission de données à bord d'aéronefs ;

La figure 5 est un schéma synoptique d'émetteur à étalement de spectre, et

La figure 6 est le schéma d'un récepteur.

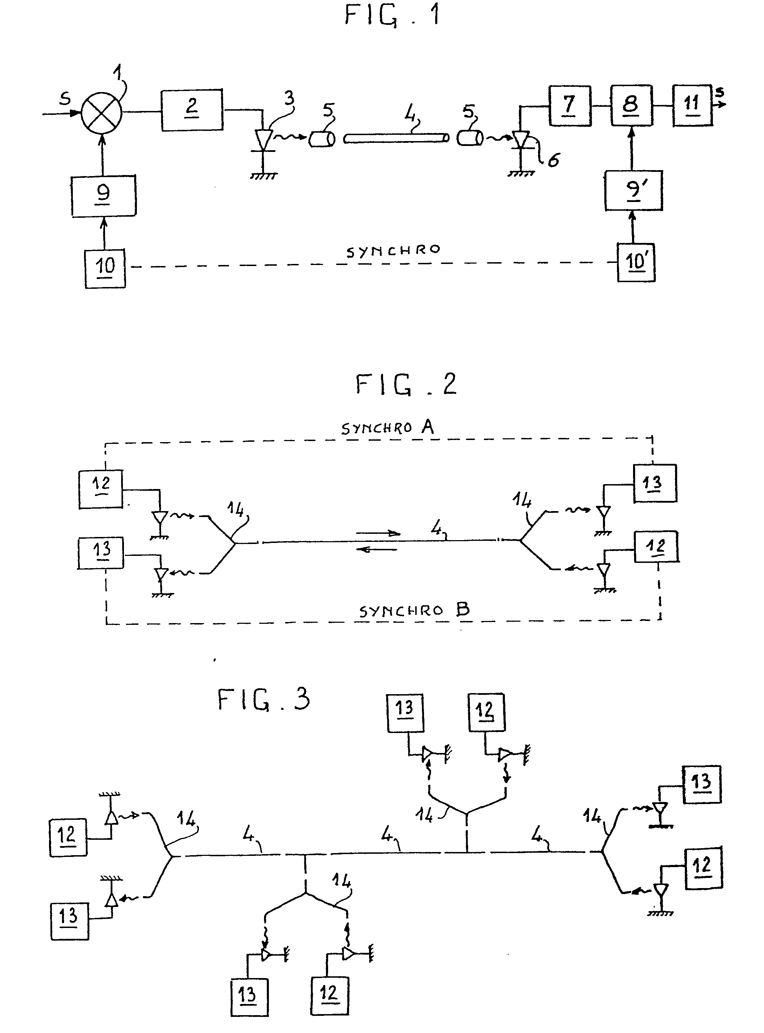

Dans une liaison à sens unique à étalement de spectre par fibres optiques, telle que représentée figure 1, on peut admettre une cadence maximale du signal à transmettre de 10 K bits (BS) et 30 M bits (BN) pour le débit maximal du générateur pseudo-aléatoire autorisé par la liaison optique.

Le gain du processus est alors :

$$PG = BN/BS = (30 \cdot 10^6)/10^4 = 3\,000$$

La partie émission comporte un multiplicateur logique 1 (porte OU exclusif par exemple) sur les entrées duquel sont appliqués le signal S à transmettre, préalablement numérisé sous forme série, et le signal issu d'un générateur 9 de séquences pseudo-aléatoires, également sous forme série à une cadence de 10 M bits. Le signal résultant est amplifié par un amplificateur 2, puis appliqué à une diode électroluminescente rapide 3 (DEL) ou à un laser à l'arséniure de gallium, par exemple.

La ligne de transmission comporte au moins une fibre optique 4 à faibles pertes. A une extrémité, un coupleur optique 5 la relie à l'émetteur, et à l'autre extrémité, un coupleur du même type 5' la relie à un récepteur.

La partie réception comporte une photodiode 6 « PIN », qui réalise la conversion des impulsions lumineuses reçues en impulsions électriques.

Un amplificateur 7 à faible bruit amène le signal à un niveau compatible avec celui qui est requis par les étages de traitement suivants.

Le dispositif essentiel est un corrélateur 8 aux entrées duquel on applique le signal issu des étages d'entrée du récepteur et le signal élaboré par un générateur 9' de séquences pseudo-aléatoires identique à celui 9 de l'émetteur, et dont l'horloge 10' est synchronisée avec celle 10 du générateur de séquences d'émission 9.

A la sortie du corrélateur 8, un détecteur à seuils 11 restitue la forme du signal S appliqué à l'entrée de l'émetteur.

Dans le cas d'une liaison à double sens sur une même ligne (figure 2), on prévoit à chaque extrémité de la ligne un émetteur 12 et un récepteur 13 à étalement de spectre, identique à ceux décrits plus haut, couplés à la ligne de transmission au moyen d'un coupleur en Y 14.

L'émission et la réception peuvent être simultanées sans se perturber mutuellement. Dans certaines configurations, il n'est pas nécessaire que le coupleur soit directif, ce qui est cependant préférable dans le cas général. L'information, dans ce cas, circulera dans le sens émetteur vers ligne et dans le sens ligne vers récepteur mais sera bloquée bilatéralement entre émetteur et récepteur.

L'émission d'un émetteur à une extrémité de la ligne de transmission sera reçue par le récepteur associé, à l'autre extrémité, à condition qu'ils soient synchronisés sur la même fréquence pseudo-aléatoire A. La liaison pourra avoir lieu en même temps dans l'autre sens à condition que l'autre couple émetteur-récepteur soit synchronisé sur une même séquence pseudo-aléatoire B différente de la première et à condition, bien sûr, d'opérer en bande de base.

Pour une liaison à accès multiples simultanés à étalement de spectre par fibres optiques, telle que représentée fig. 3, chaque poste d'abonné comporte un émetteur 12, un récepteur 13 et un coupleur 14.

Un poste est identifié par la séquence pseudo-aléatoire unique de son émetteur.

Lorsqu'un récepteur veut se mettre à l'écoute d'un émetteur particulier, il lui faut recréer une réplique exacte et synchronisée de la séquence pseudo-aléatoire de l'émetteur concerné. Son corrélateur extraira le signal correspondant à cet émetteur de tous les autres présents à ce moment sur la ligne dans le rapport du gain du processus PG (3 000 dans l'exemple considéré). Pour diminuer les risques de corrélations parasites, des mesures particulières seront prises :

— Les horloges des générateurs de séquences pseudo-aléatoires de chaque émetteur seront calées sur des fréquences sensiblement différentes, premières entre elles ;

— Les séquences pseudo-aléatoires, identifiant les abonnés, seront choisies de longueur maximale, compatible avec un temps d'acquisition de la synchronisation acceptable ;

— Les séquences seront choisies de façon à présenter entre elles le minimum de corrélations parasites.

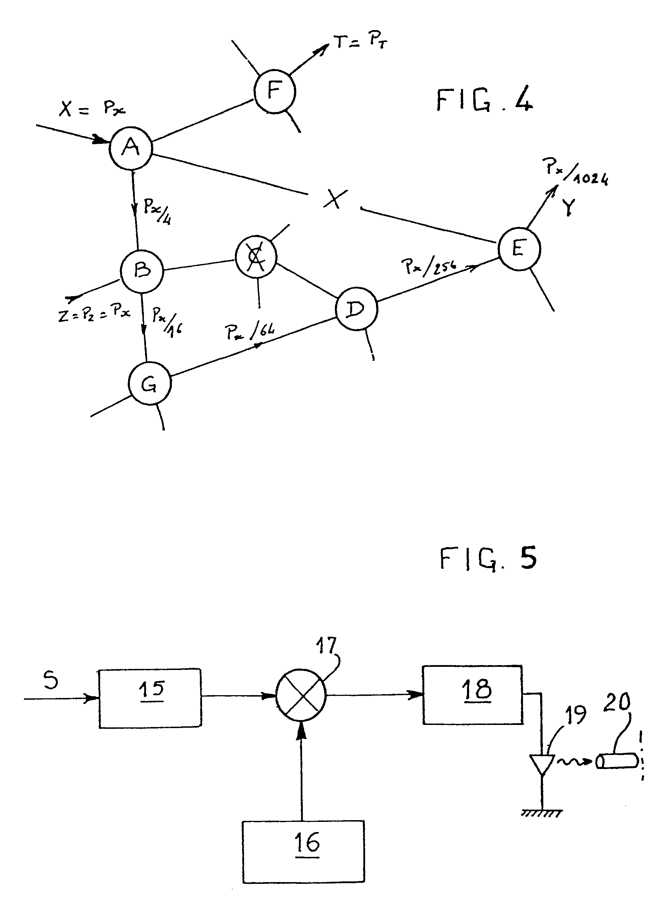

Dans une liaison maillée à étalement de spectre par fibres optiques (figure 4), afin d'accroître la sécurité de transmission, dans l'hypothèse d'une rupture de la ligne de transmission optique, une structure à chemins multiples maillée est adoptée.

Chaque poste d'abonné ne diffère de ceux précédemment décrits que par le coupleur. Celui-ci est remplacé par un mélangeur optique à plusieurs voies.

Si l'un des chemins s'interrompt, l'information peut toujours transiter en empruntant une autre voie.

L'inconvénient d'une telle structure réside, outre dans sa complexité, dans la création d'échos en fonctionnement normal.

Supposons :

— que chaque abonné soit raccordé au réseau par un nœud, tel que A,B,C ... G ; chaque nœud, entièrement passif, est constitué par un mélangeur optique et quatre bornes pouvant indifféremment jouer le rôle d'entrée ou de sortie ;

— que la puissance injectée par une borne d'un nœud, considérée comme entrée, se répartisse uniformément et totalement (nœud sans perte) entre les quatre bornes ; chacune des trois autres bornes considérée comme sortie recevra 1/4 de la puissance incidente ;

— qu'un seul abonné X émette un message de puissance Px à destination d'un seul abonné Y connecté au réseau par le nœud E ;

— que les liaisons entre les nœuds soient sans pertes.

Le message de X pourra parvenir à Y :

— par le chemin AE
— par le chemin ABCDE
— par le chemin ABGDE

simultanément, d'où les multiples échos signalés plus haut.

L'intérêt d'une telle structure est toutefois sa fiabilité. Sur la figure 4, on a supposé que la liaison directe AE était coupée et le nœud C détruit. Il reste encore un chemin ABGDE possible pour acheminer le message de X vers Y.

On observera que par ce chemin, Y ne recevra une puissance que de − 30 dB par rapport à Px (au lieu de 6 dB par le trajet direct AE). Un tel niveau de signal est cependant suffisant pour une transmission correcte par des moyens connus.

Le réseau sera maillé de telle sorte qu'aucun abonné n'aura à transiter par plus de cinq nœuds consécutifs pour atteindre son correspondant le plus éloigné.

Observons que si un autre abonné Z émet un message de puissance Pz = Px à l'entrée du nœud B, voisin du nœud A, à destination d'un abonné T raccordé au réseau par le nœud F, le récepteur de X recevra simultanément :

— Une fraction du signal de son propre émetteur reçue en retour, de puissance Px/4 (– 6 dB) qu'il lui sera facile de reconnaître ;

— Une fraction du signal transmis par l'émetteur de Z, de puissance Px/16 (– 12 dB) qu'il pourra éliminer par corrélation.

Supposons que le récepteur de X désire recevoir la réponse de Y et que la puissance Py de l'émetteur de Y soit égale à Px.

Le récepteur de X recevra en même temps que les deux signaux mentionnés plus haut un message de Y d'un puissance égale à Px/1024 (– 30 dB).

Le gain du processus (PG) devra donc permettre d'extraire le signal utile du brouilleur avec – 18 dB en puissance.

Comme le gain de processus est de 35 dB, nous avons encore une marge de 17 dB, soit 5 brouilleurs placés dans des conditions identiques à Z.

Dans une liaison à étalement de spectre par fibres optiques, l'émetteur (figure 5) comporte :

— un organe 15 de numérisation et de mise en forme de l'information qui doit sortir en série en logique à deux niveaux. Il faut noter que la numérisation n'est pas impérative, car l'information pourrait être transmise sous forme analogique en modulation de durée par exemple, à condition que les niveaux soient compatibles avec la logique.

— un générateur de code pseudo-aléatoire programmable 16, qui fournit une suite de UNS et de ZEROS dont la distribution est quasi aléatoire en fonction du temps. C'est-à-dire que le nombre de 1 est égal, à une unité près, au nombre de 0 ainsi que les 11 et 00, 111 et 000 etc. La séquence, qui sert à identifier une fois pour toutes un émetteur particulier à la construction, est choisie en fonction : du nombre de messagers susceptibles d'émettre simultanément sur la ligne, des interférences et de la vitesse d'acquisition souhaitée de la synchronisation. Elle doit être aussi longue que possible pour se rapprocher des propriétés des générateurs aléatoires, elle doit présenter un pic de corrélation bien net (séquence linéaire), et des niveaux d'intercorrélation avec les autres séquences aussi faibles que possible (séquences orthogonales). En pratique, ce générateur peut être réalisé au moyen d'un registre à décalage rebouclé à l'aide d'une ou plusieurs portes « OU exclusif » ou encore au moyen d'une mémoire morte.

— un modulateur 17, qui réalise le produit des deux informations que sont le message et le code pseudo-aléatoire. A sa sortie, la phase de la séquence pseudo-aléatoire s'inverse au rythme du message. Pratiquement on utilise une porte « OU exclusif ».

— un adaptateur de puissance 18, qui réalise l'adaptation en puissance nécessaire pour alimenter un émetteur de lumière 19 (qui peut être une diode électroluminescente ou un laser), transformant les impulsions électriques en impulsions lumineuses introduites dans la fibre optique 20. Dans le cas d'utilisation d'un laser, il peut être nécessaire de rétrécir les impulsions afin de respecter le taux de travail du composant. Une contreréaction peut s'avérer utile pour maintenir constante la puissance émise malgré le vieillissement de l'émetteur de lumière. Pratiquement, on réalise un amplificateur vidéofréquence dont la bande passante s'étend environ cinq fois au-delà de la fréquence du générateur pseudo-aléatoire. Il doit pouvoir, en sortie, fournir un courant suffisant pour alimenter le générateur de lumière, c'est-à-dire entre 100 et 300 mA.

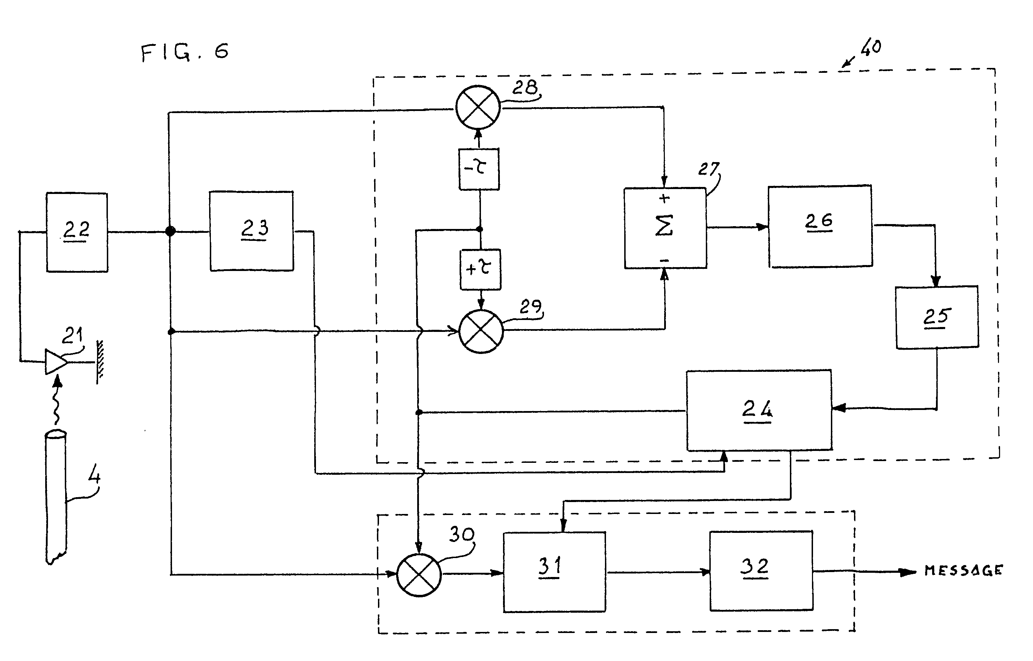

Le récepteur (figure 6) comporte :

— un transducteur 21 de lumière en courant électrique, suivi d'un amplificateur 22 à large bande et muni d'un contrôle automatique de gain. A la sortie de l'amplificateur 22, les signaux sont écrêtés ;

— un dispositif d'acquisition de la synchronisation comprenant un filtre adapté passif 23 ;

— une boucle d'asservissement 40, destinée à synchroniser l'horloge du générateur pseudo-aléatoire, et qui comprend : un générateur de séquence 24, une horloge VCO 25, soit « Voltage Controlled oscillator », c'est-à-dire un oscillateur dont la fréquence est commandée par une tension, un filtre passe-bas 26, destiné à filtrer le signal de commande de l'horloge VCO, un sommateur 27, qui effectue la différence entre les signaux issus de deux corrélateurs 28 et 29 avec les commandes référence desquels deux dispositifs à retards + $\tau$ et – $\tau$ sont insérés en série.

Le transducteur 21 doit être d'un modèle adapté aux transmissions optiques, notamment en rapport signal/bruit et en bande passante. On choisira donc une photodiode en avalanche ou une photodiode PIN.

L'amplificateur 22, à grande impédance d'entrée (Zi > 10 MΩ), devra pouvoir amplifier une bande de fréquences suffisantes s'étalant de moins de deux fois la fréquence la plus basse à plus de cinq fois la plus haute fréquence à transmettre. Il comporte une boucle de contrôle automatique de gain associée à un circuit d'écrêtage, de façon à normaliser l'amplitude des signaux à un niveau compatible avec la logique utilisée dans les étages suivants. Ce niveau devra demeurer constant dans toute la gamme de variation des signaux d'entrée.

Le filtre adapté passif 23 est un corrélateur qui ne nécessite pas d'horloge pour son fonctionnement. Il peut être réalisé à partir d'éléments de ligne à retard LC ou d'un dispositif à onde acoustique de surface. Ces deux solutions ont ceci de commun, c'est qu'elles comportent leur propre référence par rapport à laquelle elles effectuent la corrélation inscrite par câblage dans leur structure. Lorsque le message qui défile tombe en coïncidence avec le profil référence, le filtre adapté passif délivre une impulsion indiquant cette coïncidence. Cette impulsion sert à initialiser la séquence pseudo-aléatoire délivrée par le générateur de séquences.

Par la boucle d'asservissement de la fréquence d'horloge, la forme d'onde du signal du message est comparée, simultanément par deux corrélateurs, à deux séquences pseudo-aléatoires identiques décalées dans le temps par les deux dispositifs à retards + τ et − τ par rapport à la séquence du générateur. Lorsque la séquence pseudo-aléatoire et le message sont rigoureusement synchronisés, les deux corrélateurs 28 et 29 délivrent des tensions identiques et leur différence effectuée par le sommateur est nulle.

Si la séquence se désynchronise en avance ou en retard par rapport au message, les deux corrélateurs délivrent des tensions différentes, d'où l'apparition d'une tension bipolaire en sortie du sommateur 27.

Cette tension est filtrée par le filtre de boucle puis appliquée à la commande de l'horloge VCO. La phase des signaux est telle que la fréquence de l'horloge VCO rattrape la fréquence du message dès qu'un écart est constaté.

L'horloge (VCO) sert à piloter le générateur de séquences pseudo-aléatoires. Le générateur déroule dans le temps une suite de UNS et de ZEROS dont la répartition est rigoureusement identique à celle du générateur de séquences à l'émission.

Une fois la synchronisation réalisée, on effectue le produit entre la séquence pseudo-aléatoire du générateur local et celle du message à l'aide d'un multiplicateur 30. Un semi-intégrateur 31 (intégrateur sur la durée d'un bit, remis à zéro en fin de bit) suivi d'un détecteur à seuils 32 restitue le message en sortie.

Le dispositif objet de l'invention peut s'appliquer aux transmissions téléphoniques, ainsi qu'à tous les domaines concernant les transmissions d'informations au moyen de fibres optiques.

## Revendication

Système à réseau maillé à accès multiples pour transmission d'informations sous forme de signaux électriques par fibres optiques entre les postes d'une série de postes, chaque poste comprenant un émetteur et un récepteur, caractérisé par le fait que
— L'émetteur comprend
    des moyens (15) de mise en forme des signaux électriques,
    un générateur (16) de code pseudo-aléatoire,
    un modulateur (17) pour réaliser le produit des signaux électriques et du code pseudo-aléatoire pour étaler le spectre des informations à transmettre sur toute la bande passante disponible à l'émission,
    un adaptateur de puissance (18) recevant ledit produit, et
    un transducteur (19) relié à l'adaptateur pour transformer les signaux de sortie de l'adaptateur en impulsions lumineuses destinés à être introduits dans la fibre optique, et
— le récepteur comprend
    un transducteur (21) recevant les impulsions lumineuses pour les transformer en signaux électriques,
    un amplificateur à contrôle automatique de gain (22) relié au transducteur (21),
    un filtre passif (23) d'acquisition de la synchronisation relié à l'amplificateur (22),
    un autre générateur (24) de code pseudo-aléatoire relié au filtre (23),
    un oscillateur (25) à fréquence commandée par une tension fournissant un signal d'horloge au générateur (24) pour le commander,
    des moyens d'asservissement (26, 27, 28, 29) connectés entre l'amplificateur (22) et l'oscillateur (25) pour synchroniser l'oscillateur (25),
    un multiplicateur (30) relié au générateur (24) et à l'amplificateur (22) pour réaliser le produit de leurs signaux de sortie,
    un semi-intégrateur (31) relié au multiplicateur (30) et
    un détecteur à seuils (32) relié au semi-intégrateur (31) pour restituer les signaux électriques transmis par l'émetteur.

## Claim

A multi-access system with lattice network for transmission of information in the form of electrical signals by optical fibers between the stations of a series of stations, each comprising an emitter and a receiver, characterized in that
— the emitter comprises :
    means (15) for shaping said electrical signals,
    a pseudo-random code generator (16),
    a modulator (17) for deriving the product of said electrical signals and said pseudo-random code in order to spread spectrum of the information to be transmitted over all the pass-band available at the emitter side,
    a power adapter (18) receiving said product, end
    a transducer (19) connected to said adapter for transducing the output signals from said adapter into light pulses to be introduced into the optical fiber, and
— said receiver comprises :
    a transducer (21) receiving said light pulses for transducing them into electrical signals,
    an amplifier (22) with automatic gain control connected to said transducer (21),
    a synchronization acquisition passive filter (23) connected to said amplifier (22),
    a further pseudo-random code generator (24) connected to said filter (23),
    a voltage controlled oscillator (25) providing a clock signal to said generator (24) for controlling the latter,
    servo-control means (26, 27, 28, 29) connected between said amplifier (22) and said oscillator (25) for synchronizing said oscillator (25),
    a multiplier (30) connected to said generator (24) and to said amplifier (22) for deriving the product of their output signals,
    a semi-integrator (31) connected to said multiplier (30), and

a threshold detector (32) connected to said semi-integrator (31) for restoring the electrical signals transmitted by the emitter.

**Anspruch**

Vermaschtes Netzsystem mit Mehrfachzugriff zum Übertragen von Informationen in Form von elektrischen Signalen durch optische Fibern zwischen Stationen einer Stationenreihe, von denen jede Station einen Sender und einen Empfänger umfaßt, dadurch gekennzeichnet, daß
— der Sender
eine Einrichtung (15) zur Formung der elektrischen Signale,
einen Generator (16) für einen pseudo-zufälligen Code,
einen Modulator (17), um das Produkt der elektrischen Signale und des pseudo-zufälligen Codes zu bilden, um das Spektrum der zu übertragenden Informationen auf den gesamten zum Senden verfügbaren Übertragungsbereich zu erweitern,
einen Leistungsadapter (18), der das erhaltene Produkt empfängt,
und einen an den Adapter angeschlossenen Wandler (19) enthält, um die Ausgangssignale des Adapters in Lichtimpulse zu transformieren, die in die optischen Fibern eingeleitet werden sollen, und daß
— der Empfänger
einen Wandler (21), der die Lichtimpulse empfängt, um sie in elektrische Signale zu transformieren,
einen an den Wandler (21) angeschlossenen Verstärker (22) mit automatischer Verstärkungskontrolle,
ein an den Verstärker (22) angeschlossenen Passiv-Filter (23) zur Synchronisationserfassung,
einen weiteren an das Filter (23) angeschlossenen Generator (24) für einen pseudo-zufälligen Code,
einen Oszillator (25) mit einer durch eine Spannung gesteuerten Frequenz, der an den Generator (24) ein Taktsignal liefert, um diesen zu steuern,
Steuereinrichtungen (26, 27, 28, 29), die zwischen dem Verstärker (22) und dem Oszillator (25) liegen, um den Oszillator (25) zu synchronisieren,
eine an den Generator (24) und den Verstärker (22) angeschlossene Multiplizierstufe (30) zur Bildung des Produktes ihrer Ausgangssignale,
einen an die Multiplizierstufe (30) angeschlossenen Semi-Integrator (31), und
einen an dem Semi-Integrator (31) angeschlossenen Schwellwert-Detektor (32) aufweist, um die von dem Sender übertragenen elektrischen Signale wiederherzustellen.

0 027 413

FIG. 1

FIG. 2

FIG. 3

1

FIG. 4

FIG. 5

2

FIG. 6

MESSAGE